# EUROPÄISCHE PATENTSCHRIFT

(11) **EP 2 746 008 B1**
(45) Veröffentlichungstag und Bekanntmachung des Hinweises auf die Patenterteilung: **09.12.2015**
(21) Anmeldenummer: 13005769.8
(22) Anmeldetag: 11.12.2013
(51) Int. Cl.: B27B 17/00, B25F 5/02

(54) **Handgeführtes Arbeitsgerät mit einem Antriebsmotor zum Antrieb mindestens eines Werkzeugs und Verfahren zu dessen Betrieb**
Hand-held work device with a drive motor for driving at least one tool and method for operating the same
Outillage portatif doté d'un moteur d'entraînement d'au moins un outil et son procédé de fonctionnement

(30) Priorität: 22.12.2012 DE 102012025309
(43) Veröffentlichungstag der Anmeldung: 25.06.2014
(73) Patentinhaber: Andreas Stihl AG & Co. KG, 71336 Waiblingen (DE)
(72) Erfinder: Mandalka, Markus, D-70364 Fellbach (DE); Heinzelmann, Georg, D-71364 Winnenden (DE); Kaupp, Klaus, D-70329 Stuttgart (DE)
(74) Vertreter: Reinhardt, Annette

(56) Entgegenhaltungen:
- JP-U- S57 123 928
- US-A- 4 302 880
- US-A- 4 406 066
- US-A- 5 862 713
- US-A1- 2002 059 731
- US-A1- 2008 121 208

## Beschreibung

Die Erfindung betrifft ein handgeführtes Arbeitsgerät mit einem Antriebsmotor zum Antrieb mindestens eines Werkzeugs der im Oberbegriff des Anspruchs 1 angegebenen Gattung sowie ein Verfahren zum Betrieb eines handgeführten Arbeitsgeräts der im Oberbegriff des Anspruchs 15 angegebenen Gattung.

Ein solches Arbeitsgerät, gemäß den Oberbegriff des Anspruchs 1, ist offenbart in US2002059731.

Es ist bekannt, bei Arbeitsgeräten mit einem Antriebsmotor eine Sperre für das Bedienelement zur Bedienung des Antriebsmotors, insbesondere für den Gashebel, vorzusehen. Eine solche Sperre kann beispielsweise eine gegenüberliegend zum Bedienelement angeordnete Gashebelsperre oder ein seitlich an einem Handgriff oder benachbart zum Handgriff angeordneter Sperrknopf sein. Es sind Sperren bekannt, die dauerhaft betätigt gehalten werden müssen. Es sind auch Sperren bekannt, die zum Betätigen des Gashebels gedrückt sein müssen und beim Loslassen des Gashebels wieder in ihre Sperrposition zurückfallen. Dadurch muss vor jeder Betätigung des Gashebels der Sperrknopf gedrückt werden. Diese bekannten Sperren sind deshalb unergonomisch. Es ist auch bekannt, neben der Gashebelsperre eine weitere Sperreinrichtung vorzusehen, die das Bedienelement blockiert. Diese weitere Sperreinrichtung ist beispielsweise über einen Schiebeschalter zu betätigen. Der Schiebeschalter muss aktiv vom Bediener in die Sperrposition zurückgestellt werden. Dies erfordert einen zusätzlichen Bedienschritt vom Bediener.

Der Erfindung liegt die Aufgabe zugrunde, ein handgeführtes Arbeitsgerät mit einem Antriebsmotor zum Antrieb mindestens eines Werkzeugs sowie ein Verfahren zu dessen Betrieb anzugeben, das eine einfache und ergonomische Bedienung ermöglicht.

Diese Aufgabe wird bezüglich des handgeführten Arbeitsgeräts durch ein handgeführtes Arbeitsgerät mit den Merkmalen des Anspruchs 1 gelöst. Bezüglich des Verfahrens wird die Aufgabe durch ein Verfahren zum Betrieb eines handgeführten Arbeitsgeräts mit den Merkmalen des Anspruchs 15 gelöst.

Dadurch, dass zwei Sperreinrichtungen vorgesehen sind, kann eine unbeabsichtigte Betätigung des Bedienelements sicher ausgeschlossen werden. Damit der Antriebsmotor über das Bedienelement bedient werden kann, müssen sich beide Sperreinrichtungen in ihrem Freigabezustand befinden. Um die Bedienung des Arbeitsgeräts zu vereinfachen und gleichzeitig sicherzustellen, dass beide Sperreinrichtungen sich im Sperrzustand befinden, wenn das Arbeitsgerät vom Bediener losgelassen, also aus der Hand gelegt wird, ist eine Verriegelungseinrichtung vorgesehen, die die erste Sperreinrichtung in ihrem Freigabezustand verriegelt, wenn sich die zweite Sperreinrichtung in ihrem Freigabezustand befindet. Der Bediener muss dadurch nur die zweite Sperreinrichtung dauerhaft betätigt halten. Die erste Sperreinrichtung wird von der Verriegelungseinrichtung in ihrem Freigabezustand verriegelt und muss deshalb nach dem Verstellen beider Sperreinrichtungen in ihren Freigabezustand nicht betätigt gehalten werden. Die Verriegelung wird gelöst, wenn die erste Sperreinrichtung in ihren Sperrzustand zurückgestellt wird. Wenn das Bedienelement, beispielsweise ein Gashebel losgelassen wird, erfolgt noch keine Rückstellung der ersten Sperreinrichtung in ihren Sperrzustand. Die erste Sperreinrichtung kann durch Halten der zweiten Sperreinrichtung in ihrem Freigabezustand gehalten werden. Dabei kann das Bedienelement losgelassen werden, ohne dass der Freigabezustand der ersten Sperreinrichtung aufgehoben wird. Dadurch ergibt sich eine ergonomische Bedienung. Gleichzeitig ist sichergestellt, dass sich beide Sperreinrichtungen in ihrem Sperrzustand befinden, wenn der Bediener die erste Sperreinrichtung in ihren Sperrzustand zurückstellt, beispielsweise beim Abstellen oder Loslassen des Arbeitsgeräts.

Die Verriegelung der ersten Sperreinrichtung im Freigabezustand bewirkt, dass das System eine einmal erfolgte Verstellung der ersten Sperreinrichtung in den Freigabezustand speichert. Die Speicherung erfolgt dabei ab dem Zeitpunkt, zu dem die zweite Sperreinrichtung in ihren Freigabezustand verstellt wurde und bis zu dem Zeitpunkt, zu dem die zweite Sperreinrichtung zurück in ihren Sperrzustand verstellt wird. Die Verriegelung kann dabei eine mechanische Speicherung des Zustands, also eine mechanische Fixierung der ersten Sperreinrichtung in einer dem Freigabezustand zugeordneten Stellung, oder eine elektrische Speicherung des Zustands, beispielsweise in einer Steuereinrichtung des Arbeitsgeräts, sein.

Vorteilhaft besitzt das Arbeitsgerät eine Blockiereinrichtung, die die Verstellung der zweiten Sperreinrichtung in ihren Freigabezustand blockiert, wenn sich die erste Sperreinrichtung in ihrem Sperrzustand befindet. Dadurch wird eine Bedienreihenfolge für die erste und die zweite Sperreinrichtung vorgegeben. Der Bediener muss zunächst die erste Sperreinrichtung in ihren Freigabezustand verstellen, um anschließend die zweite Sperreinrichtung in ihren Freigabezustand verstellen zu können. Erst wenn der Bediener beide Sperreinrichtungen in der vorgegebenen Reihenfolge in ihren Freigabezustand verstellt hat, erfolgt die Verriegelung der ersten Sperreinrichtung in ihrem Freigabezustand, und der Bediener kann ein Betätigungselement der ersten Sperreinrichtung loslassen. Eine einfache Gestaltung ergibt sich, wenn die Blockiereinrichtung eine Sperrkontur umfasst, die die Verstellung der zweiten Sperreinrichtung in ihren Freigabezustand blockiert. Es kann allerdings auch vorgesehen sein, dass die Blockiereinrichtung in Form einer elektrischen Schaltung ausgebildet ist und die Freigabe des Bedienelements zur Bedienung des Antriebsmotors und die Verriegelung der ersten Sperreinrichtung in ihrem Freigabezustand nur dann erfolgt, wenn der Bediener die vorgegebene Bedienreihenfolge eingehalten hat, also die erste Sperreinrichtung vor der zweiten Sperreinrichtung in ihren Freigabezustand verstellt hat.

Vorteilhaft liegt die Betätigungsrichtung der ersten Sperreinrichtung quer zur Betätigungsrichtung der zweiten Sperreinrichtung. Die Betätigungsrichtung der ersten Sperreinrichtung liegt insbesondere senkrecht zur Betätigungsrichtung der zweiten Sperreinrichtung. Durch diese Anordnung der Betätigungsrichtungen kann ein unbeabsichtigtes Betätigen beider Sperreinrichtungen sicher vermieden werden. Ein unbeabsichtigtes Betätigen beider Sperreinrichtungen kann jedoch auch durch geeignete Anordnung der Betätigungselemente der beiden Sperreinrichtungen, beispielsweise durch die Anordnung in einem entsprechend großen Abstand, erreicht werden.

Vorteilhaft verriegelt die Verriegelungseinrichtung die erste Sperreinrichtung mechanisch. Eine mechanisch arbeitende Verriegelungseinrichtung kann einfach hergestellt werden und einen robusten Aufbau besitzen. Insbesondere besitzt die erste Sperreinrichtung ein Betätigungselement zur Verstellung der ersten Sperreinrichtung vom Sperrzustand in den Freigabezustand. Für die zweite Sperreinrichtung ist vorteilhaft ein zweites Betätigungselement zur Verstellung der zweiten Sperreinrichtung vom Sperrzustand in den Freigabezustand vorgesehen. Die Verriegelungseinrichtung wird insbesondere von dem ersten Betätigungselement und dem zweiten Betätigungselement gebildet. Ein besonders einfacher Aufbau ergibt sich, wenn das erste und das zweite Betätigungselement sowohl die Verriegelungseinrichtung als auch die Blockiereinrichtung, die die Bedienreihenfolge vorgibt, bilden.

Alternativ kann vorgesehen sein, dass das erste Betätigungselement auch zur Verstellung der zweiten Sperreinrichtung vom Sperrzustand in den Freigabezustand dient. Das erste Betätigungselement ist vorteilhaft in einem Gehäuse gelagert, und die Verriegelungseinrichtung wird von dem ersten Betätigungselement und dem Gehäuse gebildet. Das Gehäuse ist insbesondere ein Griffgehäuse des Arbeitsgeräts, an dem das Bedienelement gelagert ist. Vorteilhaft wird das Betätigungselement zur Verstellung der ersten und der zweiten Sperreinrichtung um senkrecht zueinander angeordnete Schwenkachsen verschwenkt. Dadurch können auf einfache Weise senkrecht zueinander ausgerichtete Betätigungsrichtungen für die erste und die zweite Sperreinrichtung erreicht werden. Das oder die Betätigungselemente sind vorteilhaft gefedert gelagert. Ist ein in verschiedenen Richtungen zu betätigendes Betätigungselement für beide Sperreinrichtungen vorgesehen, so ist das Betätigungselement vorteilhaft in beiden Betätigungsrichtungen gefedert gelagert. Das Betätigungselement ist vorteilhaft in Richtung auf die unbetätigte, insbesondere die dem Sperrzustand der Sperreinrichtung zugeordnete Lage vorgespannt.

Es kann auch vorgesehen sein, dass die Verriegelungseinrichtung die erste Sperreinrichtung elektrisch verriegelt. Zusätzlich kann eine mechanische Verriegelung des Betätigungselements der ersten Sperreinrichtung vorgesehen sein. Dadurch kann einem Benutzer angezeigt werden, dass die erste Sperreinrichtung in ihrem Freigabezustand verriegelt ist. Es kann jedoch auch vorgesehen sein, dass die Verriegelung ausschließlich elektrisch, insbesondere durch einen entsprechenden Programmcode in einem Mikroprozessor, erfolgt. Das Betätigungselement kann dabei wieder zurück in seine unbetätigte Stellung verstellt werden. Die Position des Betätigungselements der ersten Sperreinrichtung kann damit unabhängig davon sein, ob sich die erste Sperreinrichtung im Freigabezustand oder im Sperrzustand befindet.

Die zweite Sperreinrichtung sperrt in ihrem Sperrzustand vorteilhaft eine Bewegung des Bedienelements. Es kann jedoch auch vorgesehen sein, dass die zweite Sperreinrichtung in ihrem Sperrzustand das Bedienelement funktionslos schaltet. Die erste Sperreinrichtung kann in ihrem Sperrzustand die zweite Sperreinrichtung sperren oder eine Bewegung des Bedienelements sperren oder das Bedienelement funktionslos schalten.

Vorteilhaft ist mindestens eine Sperreinrichtung in Richtung auf ihren Sperrzustand gefedert gelagert. Beim Loslassen eines Betätigungselements der Sperreinrichtung wird die Sperreinrichtung dadurch in ihren Sperrzustand verstellt. Vorteilhaft sind beide Sperreinrichtungen in Richtung auf ihren Sperrzustand gefedert gelagert. Wirken die erste und/oder die zweite Sperreinrichtung elektrisch, so ist der Sperrzustand der Ausgangszustand der Sperreinrichtungen, und eine Verstellung in den Freigabezustand muss aktiv durch den Benutzer erfolgen. Nur solange der Benutzer ein Betätigungselement der zweiten Sperreinrichtung betätigt, befindet sich die Sperreinrichtung im Freigabezustand. Sobald der Benutzer das Betätigungselement loslässt, wird die zweite Sperreinrichtung in den Freigabezustand verstellt, der elektrisch beispielsweise in einem Mikroprozessor gespeicherte Zustand wird also geändert. Auch bei der zweiten Sperreinrichtung kann der Zustand der Sperreinrichtung unabhängig von der Position eines Betätigungselements für die Sperreinrichtung sein. Beispielsweise kann vorgesehen sein, dass die zweite Sperreinrichtung nur dann in den Freigabezustand verstellt wird, wenn ein Betätigungselement für die erste Sperreinrichtung betätigt ist, während ein Betätigungselement für die zweite Sperreinrichtung betätigt wird. Wenn das Betätigungselement für die erste Sperreinrichtung nicht betätigt ist, kann dennoch ein Betätigen des Betätigungselements für die zweite Sperreinrichtung möglich sein, diese Betätigung führt jedoch vorteilhaft nicht zur Verstellung der zweiten Sperreinrichtung in die Freigabestellung.

Für ein Verfahren zum Betrieb des handgeführten Arbeitsgeräts ist vorgesehen, dass die erste Sperreinrichtung in ihrem Freigabezustand verriegelt wird, wenn sich beide Sperreinrichtungen gleichzeitig in ihrem Freigabezustand befinden. Insbesondere wird die erste Sperreinrichtung in ihrem Freigabezustand verriegelt, wenn die zweite Sperreinrichtung in ihren Freigabezustand verstellt wird, während sich die erste Sperreinrichtung in ihrem Sperrzustand befindet. Dadurch kann ein Betätigungselement für die erste Sperreinrichtung losgelassen werden, nachdem die zweite Sperreinrichtung in ihren Freigabezustand verstellt wurde, während sich die erste Sperreinrichtung in ihrem Freigabezustand befand. Alternativ kann auch vorgesehen sein, dass die erste Sperreinrichtung in ihrem Freigabezustand verriegelt wird, wenn die erste Sperreinrichtung in ihren Freigabezustand verstellt wird, während sich die zweite Sperreinrichtung in ihrem Freigabezustand befindet. Zur Verstellung beider Sperreinrichtungen in ihren Freigabezustand muss in diesem Fall die zweite Sperreinrichtung in ihren Freigabezustand verstellt werden und anschließend die erste Sperreinrichtung in ihren Freigabezustand verstellt werden. Sobald sich beide Sperreinrichtungen in ihrem Freigabezustand befinden, erfolgt die Verriegelung der ersten Sperreinrichtung in ihrem Freigabezustand, so dass ein Betätigungselement für die erste Sperreinrichtung wieder losgelassen werden kann. Um beide Sperreinrichtungen in den Freigabezustand zu verstellen, muss ein Betätigungselement für die erste Sperreinrichtung nur kurz angetippt werden, während sich die zweite Sperreinrichtung in Freigabezustand befindet.

Zur Inbetriebnahme des Arbeitsgeräts müssen demnach lediglich beide Sperreinrichtungen gleichzeitig betätigt worden sein. Diese gleichzeitige Betätigung beider Sperreinrichtungen muss jedoch nicht für die gesamte Betriebszeit aufrechterhalten werden, da die erste Sperreinrichtung in ihrem Freigabezustand verriegelt wird. Die Verriegelung der ersten Sperreinrichtung in ihrem Freigabezustand wird vorteilhaft dann gelöst, wenn die zweite Sperreinrichtung in ihren Sperrzustand zurückgestellt wird. Dadurch ergibt sich eine einfache und sichere Bedienung. Da die erste und die zweite Sperreinrichtung nicht dauerhaft vom Bediener betätigt gehalten werden müssen, können die beiden Sperreinrichtungen so angeordnet werden, dass eine gleichzeitige Betätigung unergonomisch ist und eine versehentliche gleichzeitige Betätigung der beiden Sperreinrichtungen ausgeschlossen werden kann.

Ausführungsbeispiele der Erfindung werden im Folgenden anhand der Zeichnung erläutert. Es zeigen:
- Fig. 1: eine schematische Darstellung einer Motorsäge,
- Fig. 2: eine Explosionsdarstellung eines ersten Ausführungsbeispiels für einen Handgriff der Motorsäge aus Fig. 1,
- Fig. 3: den Handgriff aus Fig. 2 in Draufsicht,
- Fig. 4: eine Seitenansicht der am Handgriff gelagerten Hebel,
- Fig. 5: einen Schnitt entlang der Linie V-V in Fig. 3,
- Fig. 6: den Handgriff in einer Darstellung entsprechend Fig. 3 mit betätigtem erstem Betätigungselement,
- Fig. 7: die am Handgriff gelagerten Hebel in Seitenansicht in der Stellung aus Fig. 6,
- Fig. 8: einen Schnitt entlang der Linie VIII-VIII in Fig. 6,
- Fig. 9: den Handgriff in einer Darstellung entsprechend Fig. 3 mit betätigtem zweitem Betätigungselement,
- Fig. 10: eine Seitenansicht des Handgriffs aus Fig. 9 in Richtung des Pfeils X in Fig. 9,
- Fig. 11: die am Handgriff gelagerten Hebel in der in den Fig. 9 und 10 gezeigten Stellung,
- Fig. 12: einen Schnitt entlang der Linie XII-XII in Fig. 10,
- Fig. 13: den Handgriff entsprechend der Darstellung aus Fig. 9 mit betätigtem Bedienelement,
- Fig. 14: eine Seitenansicht in Richtung des Pfeils XIV in Fig. 13,
- Fig. 15: die am Handgriff gelagerten Hebel in der in den Fig. 13 und 14 gezeigten Stellung,
- Fig. 16: einen Schnitt entlang der Linie XVI-XVI in Fig. 14,
- Fig. 17: eine Explosionsdarstellung eines Ausführungsbeispiels des Handgriffs,
- Fig. 18: eine Seitenansicht des Handgriffs,
- Fig. 19: einen Schnitt entlang der Linie XIX-XIX in Fig. 18,
- Fig. 20: einen Schnitt entlang der Linie XX-XX in Fig. 19,
- Fig. 21: eine Seitenansicht des Handgriffs mit teilweise betätigtem Betätigungselement,
- Fig. 22: einen Schnitt entlang der Linie XXII-XXII in Fig. 21,
- Fig. 23: einen Schnitt entlang der Linie XXIII-XXIII in Fig. 22,
- Fig. 24: eine Seitenansicht des Handgriffs mit betätigtem Betätigungselement und betätigtem Bedienelement,
- Fig. 25: einen Schnitt entlang der Linie XXV-XXV in Fig. 24,
- Fig. 26: einen Schnitt entlang der Linie XXVI-XXVI in Fig. 25,
- Fig. 27: einen Schnitt durch ein Ausführungsbeispiel des Handgriffs entsprechend der Darstellung in Fig. 5,
- Fig. 28: einen Schnitt durch das in Fig. 27 gezeigte Ausführungsbeispiel entsprechend der Darstellung in Fig. 12,
- Fig. 29: einen Schnitt durch ein Ausführungsbeispiel des Handgriffs,
- Fig. 30: den Schnitt aus Fig. 29 mit teilweise betätigtem Betätigungselement,
- Fig. 31: den Schnitt aus Fig. 29 mit betätigtem Betätigungselement und betätigtem Bedienelement.

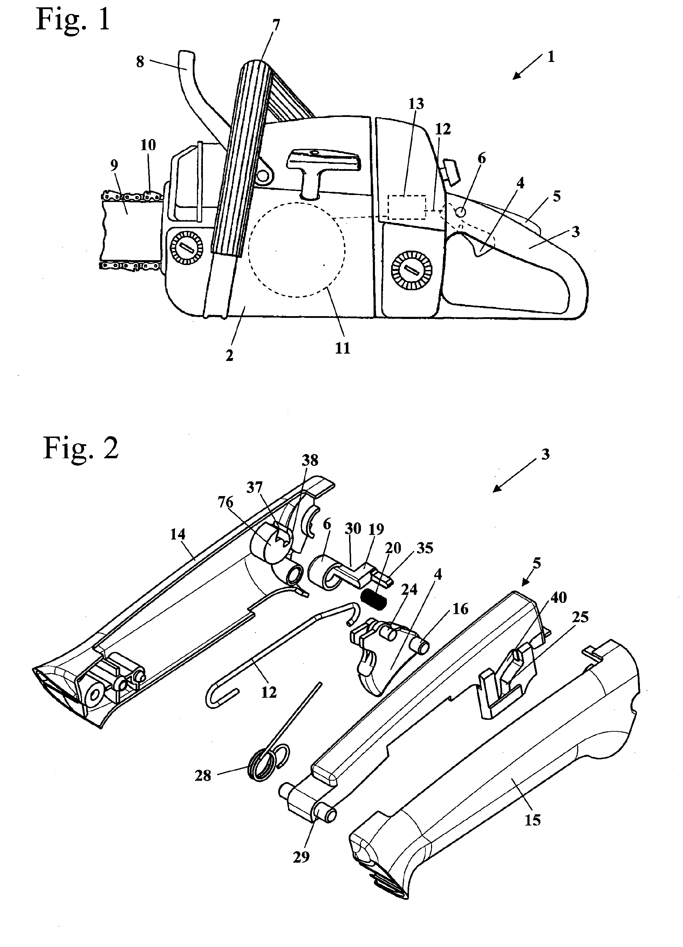

Fig. 1 zeigt als Ausführungsbeispiel für ein handgeführtes Arbeitsgerät eine Motorsäge 1. Die vorliegende Erfindung kann auch bei einem anderen handgeführten Arbeitsgerät wie beispielsweise einer Heckenschere, einem Trennschleifer, einem Freischneider, einem Blasgerät oder dergleichen zum Einsatz kommen. Die Motorsäge 1 besitzt ein Gehäuse 2, an dem ein Handgriff 3 festgelegt ist. An dem Handgriff 3 sind ein Bedienelement 4 zur Bedienung eines im Gehäuse 2 angeordneten Antriebsmotors 11, ein erstes Betätigungselement 6 und ein zweites Betätigungselement 5 beweglich gelagert. Das Bedienelement 4 bedient den Antriebsmotor 11 über ein Koppelelement 12 und eine Steuereinrichtung 13. Im Ausführungsbeispiel ist der Antriebsmotor 11 ein Elektromotor, der vorteilhaft von einer Batterie, insbesondere einem Akku mit Energie versorgt wird. Der Antriebsmotor 11 kann jedoch auch über ein Anschlusskabel zur Verbindung mit einer Stromquelle mit Energie versorgt werden. Der Antriebsmotor 11 kann auch ein Verbrennungsmotor sein. Ist der Antriebsmotor ein Verbrennungsmotor, so wird keine Steuereinrichtung 13 benötigt. Das Koppelelement 12 wirkt vorteilhaft auf ein Steuerelement des Verbrennungsmotors, beispielsweise auf ein in einem Ansaugkanal angeordnetes Drosselelement.

Zum Führen der Motorsäge 1 ist ein Griffrohr 7 vorgesehen, das das Gehäuse 2 übergreift. An der dem Handgriff 3 abgewandten Seite des Gehäuses 2 ragt eine Führungsschiene 9 nach vom. An der Führungsschiene 9 ist eine Sägekette 10 umlaufend angetrieben. An der der Führungsschiene 9 zugewandten Seite des Griffrohrs 7 ist ein Handschutz 8 angeordnet, der vorteilhaft zum Auslösen einer Bremseinrichtung zum Stillsetzen der Sägekette 10 dient.

Um die Motorsäge 1 in Betrieb zu nehmen, muss zunächst das erste Betätigungselement 6 gedrückt und anschließend das zweite Betätigungselement 5 verschwenkt werden. Während das zweite Betätigungselement 5 verschwenkt wird, muss das erste Betätigungselement 6 gedrückt gehalten werden. Nachdem das zweite Betätigungselement betätigt wurde, kann das erste Betätigungselement 6 losgelassen werden. Das Bedienelement 4 steht in Wirkverbindung mit dem Antriebsmotor 11, solange das zweite Betätigungselement 5 gedrückt gehalten bleibt. Wird das zweite Betätigungselement 5 losgelassen, so kann die Schwenkbewegung des Bedienelements 4 blockiert werden, so dass das Bedienelement 4 nicht betätigt werden kann. Alternativ kann auch die Wirkverbindung zwischen dem Bedienelement 4 und dem Antriebsmotor 11 unterbrochen werden, so dass ein Verschwenken des Bedienelements 4 nicht auf den Antriebsmotor 11 wirkt, sondern das Bedienelement 4 funktionslos ist.

Wie Fig. 1 zeigt, sind die Betätigungselemente 5 und 6 voneinander beabstandet angeordnet. Wird die Motorsäge 1 so angeordnet, dass das zweite Betätigungselement 5 nach oben weist, so ragt das erste Betätigungselement 5 seitlich aus dem Handgriff 3. Das erste Betätigungselement 6 ist dabei so angeordnet, dass es vom Bediener nicht unbeabsichtigt betätigt werden kann, wenn der Bediener die Motorsäge 1 am Handgriff 3 trägt. Um eine ergonomische Bedienung zu ermöglichen, ist eine Verriegelungseinrichtung vorgesehen, die das erste Betätigungselement 6 in seinem Freigabezustand, also in dem Zustand, in dem das Bedienelement 4 den Antriebsmotor 11 betätigen kann, verriegelt, wenn das zweite Betätigungselement 5 ebenfalls in seinem Freigabezustand steht. Dadurch muss das erste Betätigungselement nicht dauerhaft gedrückt gehalten werden, sondern muss lediglich zum Entsperren des zweiten Betätigungselements betätigt werden. Dadurch ergibt sich eine ergonomische Bedienung.

Fig. 2 zeigt den Handgriff 3 in Explosionsdarstellung. Das Bedienelement 4 ist mit einem Lagerbolzen 16 am Handgriff 3 gelagert. Der Handgriff 3 besteht aus einer ersten Griffhalbschale 14 und einer zweiten Griffhalbschale 15. Das Bedienelement 4 besitzt einen Sperrnocken 24, der in einer Freisparung 40 des zweiten Betätigungselements 5 angeordnet ist. Das zweite Betätigungselement 5 besitzt an der Freisparung 40 einen Anschlag 25, dessen Funktion im Folgenden noch näher beschrieben wird. Das zweite Betätigungselement 5 ist mit einem Lagerbolzen 29 schwenkbar am Handgriff 3 gelagert und von einer Feder 28 in Richtung auf seine unbetätigte Stellung gefedert.

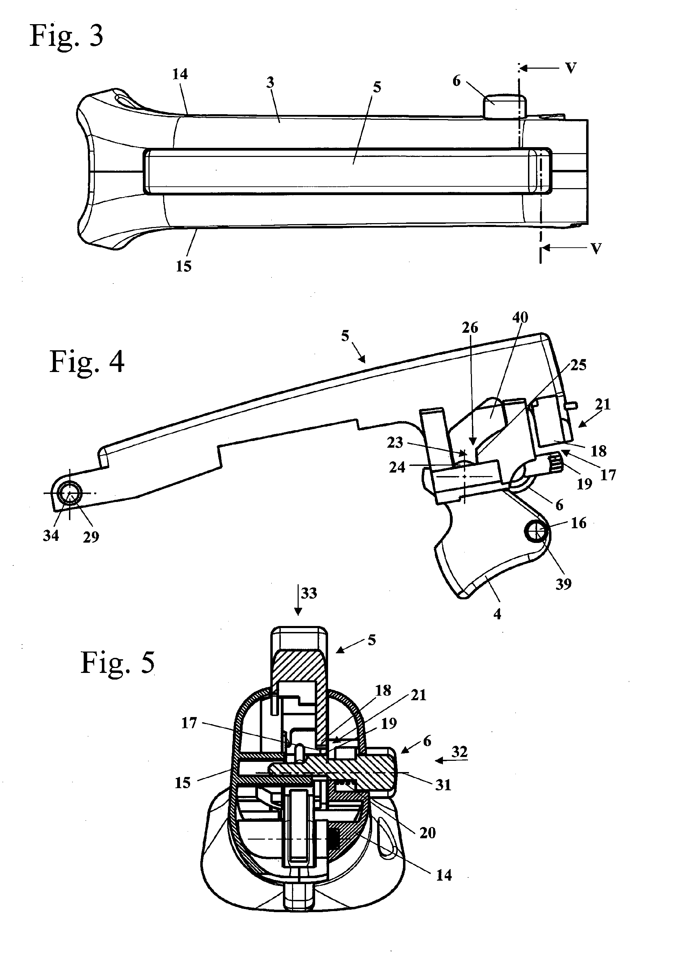

Das erste Betätigungselement 6 ist als Druckknopf ausgebildet. Das erste Betätigungselement 6 ist von einer Feder 20 in Richtung auf seine unbetätigte Stellung vorgespannt. Die erste Griffhalbschale 14 besitzt eine Aufnahme 76 für das erste Betätigungselement 6. Die Aufnahme 76 besitzt einen Schlitz 37, der die Montage des ersten Betätigungselements 6 ermöglicht, sowie einen Anschlag 38, an dem das erste Betätigungselement 6 in unbetätigtem Zustand mit einer Stirnseite eines Sperrabschnitts 19 anliegt. Der Sperrabschnitt 19 ist an einer Abwinkelung des ersten Betätigungselements 6 ausgebildet. Benachbart zum Sperrabschnitt 19 besitzt das erste Betätigungselement eine Aussparung 30, in die das zweite Betätigungselement 5 eingreifen kann. Die Aussparung 30 ist im Ausführungsbeispiel der in Betätigungsrichtung 32 (Fig. 5) neben dem Sperrabschnitt 19 angeordnete Bereich. Das erste Betätigungselement 6 besitzt an der der Aufnahme 76 gegenüberliegenden, sich zur zweiten Griffhalbschale 15 erstreckenden Seite einen Führungszapfen 35. In Fig. 2 ist außerdem ein Koppelelement 12 gezeigt, mit dem das Bedienelement 4 auf die Steuereinrichtung 13 einwirkt. Dabei sind vorteilhaft weitere Koppelemente zwischen dem gezeigten, als Zugstange ausgebildeten Koppelelement 12 und der Steuereinrichtung 13 vorgesehen.

Die Fig. 3 bis 5 zeigen den Handgriff 3, wobei das erste Betätigungselement 6, das zweite Betätigungselement 5 und das Bedienelement 4 nicht betätigt sind. Wie Fig. 4 zeigt, ist eine erste Sperreinrichtung 17 zwischen dem ersten Betätigungselement 6 und dem zweiten Betätigungselement 5 gebildet. Die erste Sperreinrichtung 17 umfasst einen Sperrabschnitt 18 am zweiten Betätigungselement 5 und den Sperrabschnitt 19 am ersten Betätigungselement 6. Der Sperrabschnitt 19 liegt im Schwenkweg des Sperrabschnitts 18, wenn das zweite Betätigungselement 5 um seine Schwenkachse 34 verschwenkt wird. Dadurch ist die Betätigung des zweiten Betätigungselements 5 durch das erste Betätigungselement 6 gesperrt. Die erste Sperreinrichtung 17 befindet sich in der in den Fig. 4 und 5 gezeigten Stellung in ihrem Sperrzustand 21.

Eine zweite Sperreinrichtung 23 ist zwischen dem Sperrnocken 24 des Bedienelements 4 und dem Anschlag 25 des zweiten Betätigungselements 5 gebildet. Der Sperrnocken 24 ragt in die Freisparung 40. Der Anschlag 25 ist durch einen Wandabschnitt der Freisparung 40 gebildet. In der in Fig. 4 gezeigten unbetätigten Stellung des zweiten Betätigungselements 5 liegt der Anschlag 25 im Schwenkweg des Sperrnockens 24 um die durch den Lagerbolzen 16 gebildete Schwenkachse 39. Das Bedienelement 4 kann deshalb nicht verschwenkt werden. Die zweite Sperreinrichtung 23 befindet sich in ihrem Sperrzustand 26.

Wie Fig. 5 zeigt, ist das erste Betätigungselement 6 in Richtung seiner Längsachse 31 in der Betätigungsrichtung 32 zu betätigen. Dabei wird das erste Betätigungselement 6 in den Handgriff 3 gedrückt, und zwar entgegen der Kraft der Feder 20. Der Sperrabschnitt 19 sperrt in dem in Fig. 5 gezeigten Sperrzustand 21 der ersten Sperreinrichtung 17 eine Verschwenkung des zweiten Betätigungselements 5. Das zweite Betätigungselement 5 ist zum Verschwenken um die Schwenkachse 34 dabei in einer Betätigungsrichtung 33 zu betätigen, die quer, im Ausführungsbeispiel senkrecht zur Betätigungsrichtung 32 des ersten Betätigungselements 6 angeordnet ist.

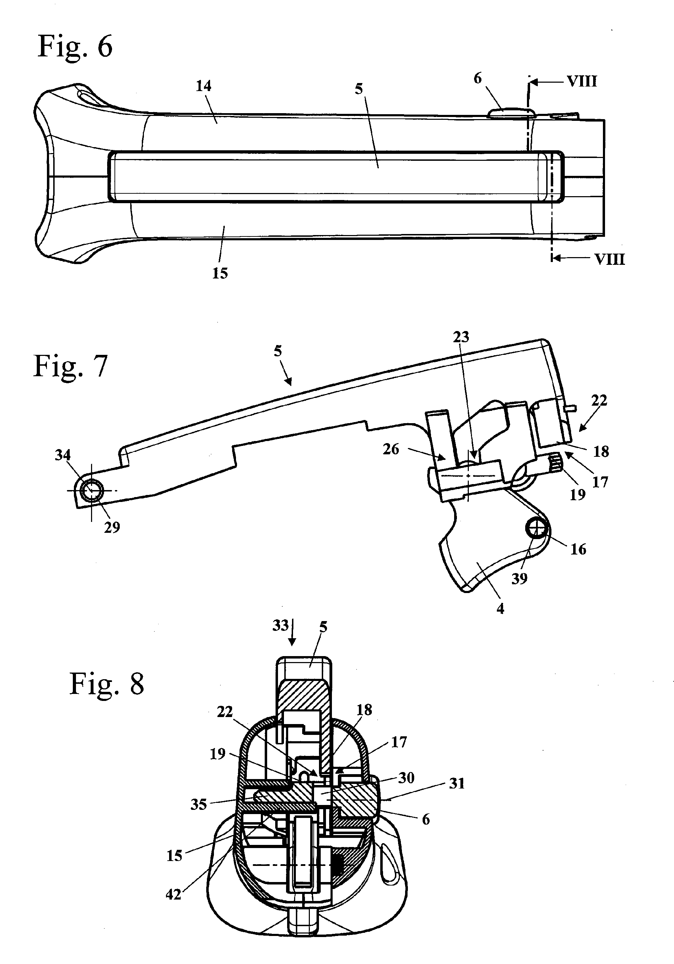

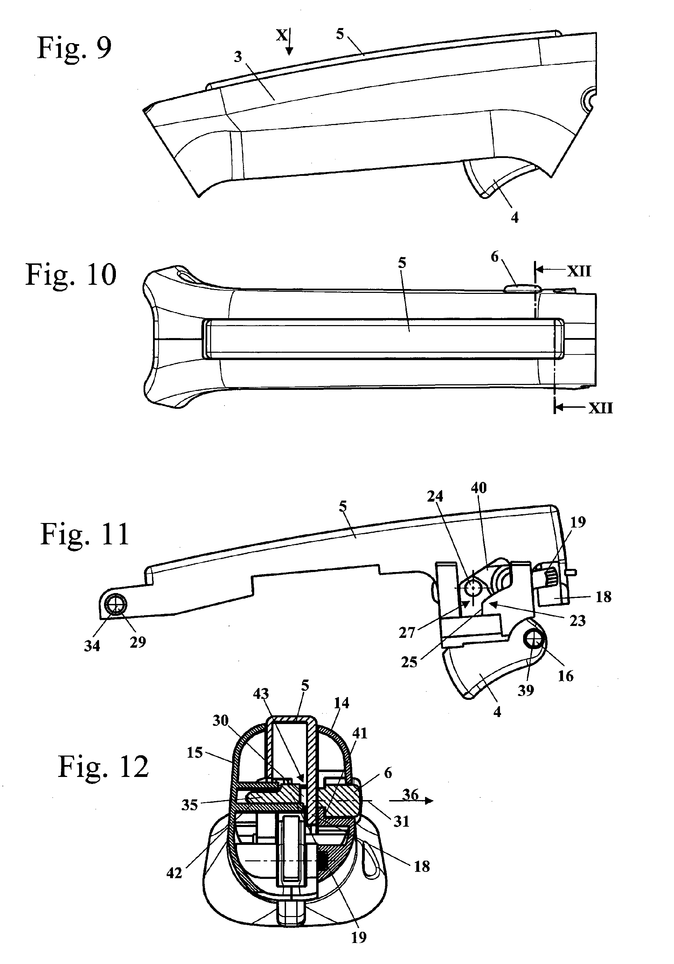

Die Fig. 6 bis 8 zeigen die Anordnung mit betätigtem erstem Betätigungselement 6. Die erste Sperreinrichtung 17 befindet sich in dieser Stellung des ersten Betätigungselements 6 in ihrem Freigabezustand 22. Wie insbesondere Fig. 8 zeigt, ist der Sperrabschnitt 18 benachbart zur Aussparung 30 des ersten Betätigungselements 6 angeordnet, so dass das zweite Betätigungselement 5 in der Betätigungsrichtung 33 betätigt werden kann, solange sich die erste Sperreinrichtung 17 in ihrem Freigabezustand 22 befindet. Wie Fig. 8 auch zeigt, ist der Führungszapfen 35 an der zweiten Grifthalbschale 15 geführt. Der Führungszapfen 35 greift dabei in eine in Fig. 12 gezeigte Führungskontur 42 der zweiten Griffhalbschale 15 ein.

Die Fig. 9 bis 12 zeigen auch das zweite Betätigungselement 5 in betätigtem Zustand. Hierzu wurde das zweite Betätigungselement 5 in der in Fig. 8 gezeigten Betätigungsrichtung 33 betätigt, in der in Fig. 1 gezeigten Stellung der Motorsäge 1 also nach unten gedrückt. In dieser Stellung liegt der Sperrnocken 24 nicht mehr am Anschlag 25 an, wie Fig. 11 zeigt. Die zweite Sperreinrichtung 23 befindet sich in ihrem Freigabezustand 27. Zum Entsperren der Motorsäge 1 muss demnach das erste Betätigungselement 6, also der Bedienknopf, seitlich in den Handgriff 3 gedrückt und anschließend das zweite Betätigungselement 5, also die Gashebelsperre, nach unten gedrückt werden.

Wie Fig. 12 zeigt, greift der erste Sperrabschnitt 18 durch die Aussparung 30. Der Sperrabschnitt 18 und die Aussparung 30 bilden eine Verriegelungseinrichtung 43, die verhindert, dass das erste Betätigungselement 6 sich in Richtung des Pfeils 36 zurück in seine unbetätigte Stellung stellen kann. In Fig. 12 ist das erste Betätigungselement 6 vollständig betätigt und liegt an einem an der ersten Griffhalbschale 14 ausgebildeten Anschlag 41 an. Wird das Betätigungselement 6 losgelassen, so kann es sich in Richtung seiner Längsachse 31 geringfügig in Richtung des Pfeils 36 bewegen, bis der Sperrabschnitt 19 am Sperrabschnitt 18 zur Anlage kommt. In dieser Stellung bleibt das erste Betätigungselement 6 verriegelt, bis das zweite Betätigungselement 5 losgelassen wird und zurück in seine unbetätigte Stellung verschwenkt. Die Rückstellung des zweiten Betätigungselements 5 erfolgt aufgrund der Kraft der in Fig. 2 gezeigten Feder 28.

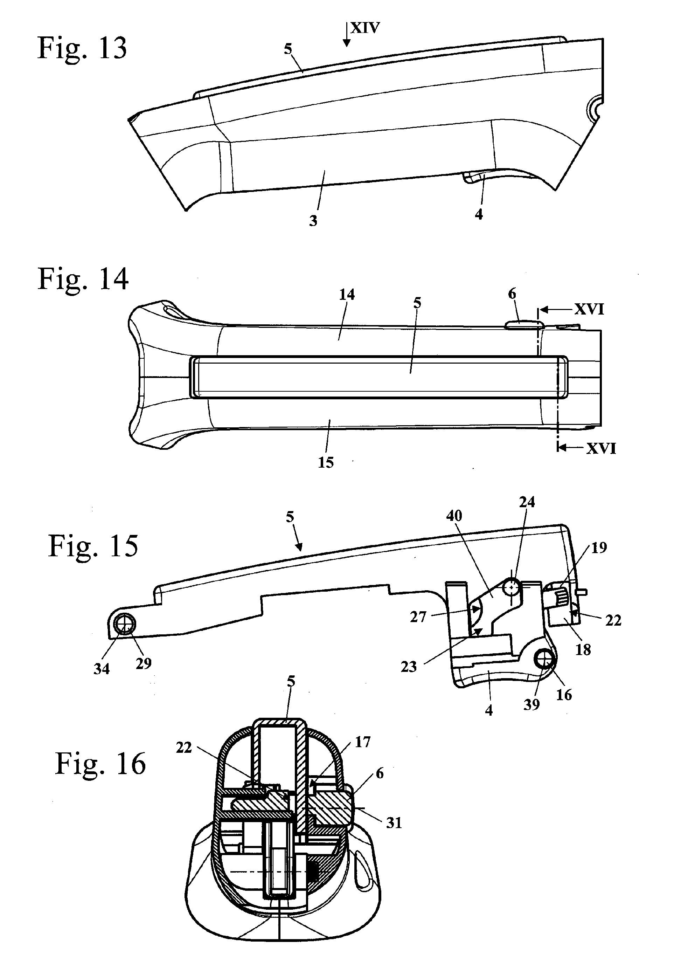

Die Fig. 13 bis 16 zeigen die Anordnung bei betätigtem Bedienelement 4. Wie Fig. 15 zeigt, wurde das Bedienelement 4 um die Schwenkachse 39 verschwenkt. Dabei hat sich der Sperrnocken 24 in der Freisparung 40 bewegt. Die erste Sperreinrichtung 17 und die zweite Sperreinrichtung 23 befinden sich in ihrem Freigabezustand 22 bzw. 27.

Bei dem in den Fig. 2 bis 16 gezeigten Ausführungsbeispiel entspricht der Freigabezustand 22, 27 und der Sperrzustand 21, 26 jeweils einer Position des zugeordneten Betätigungselements 5, 6. Die Position der Betätigungselemente 5 und 6 ist demnach an den Zustand der Sperreinrichtungen 17, 23 gekoppelt. Die Position der Betätigungselemente 5 und 6 kann jedoch auch unabhängig vom Zustand der zugeordneten Sperreinrichtung 17 und 23 sein. Beispielsweise kann das erste Betätigungselement 6 zweiteilig ausgebildet sein, wobei ein Teil den vom Bediener zu betätigenden Abschnitt und ein zweiter Teil den Sperrabschnitt 19 besitzt. Beide Teile sind vorteilhaft gefedert gelagert. Ist die erste Sperreinrichtung 17 in ihrem Freigabezustand 22 verriegelt, so kann der Bediener den Bedienknopf loslassen, der sich aufgrund der Federkraft in seine unbetätigte Stellung zurückstellt. Der Sperrabschnitt 19 bleibt vom Sperrabschnitt 18 gehalten, und die Sperreinrichtung 17 bleibt in ihrem Freigabezustand 22, bis die Verriegelung durch Loslassen des zweiten Betätigungselements 5 aufgehoben wird.

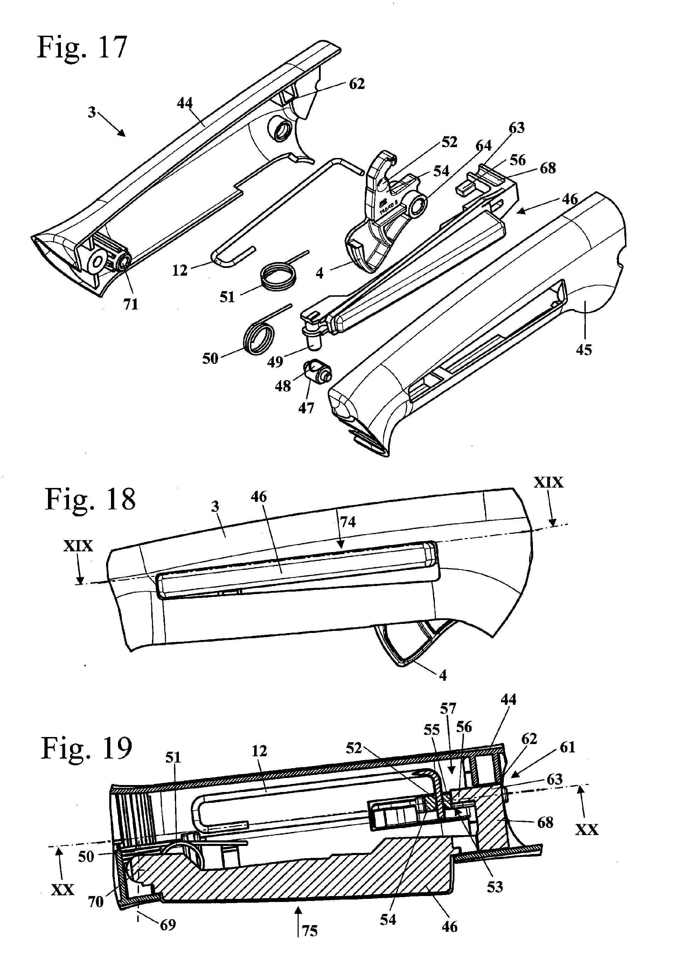

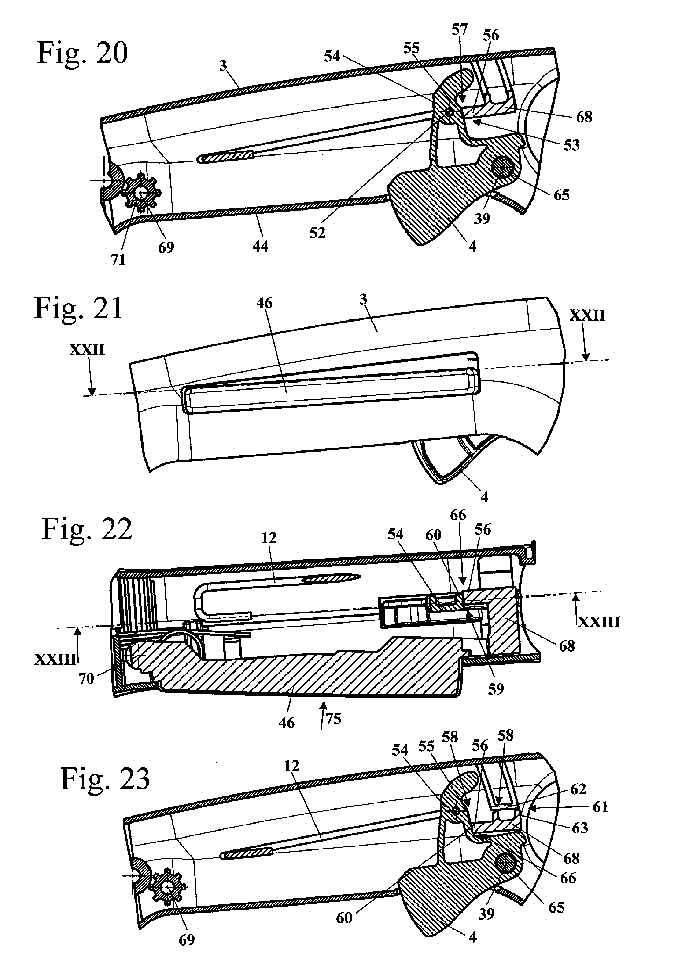

Fig. 17 zeigt ein weiteres Ausführungsbeispiel für den Handgriff 3 und die daran angeordneten Elemente. Gleiche Bezugszeichen kennzeichnen in allen Ausführungsbeispielen einander entsprechende Elemente. Wie Fig. 17 zeigt, ist der hier gezeigte Handgriff 3 aus einer ersten Griffhalbschale 44 und einer zweiten Griffhalbschale 45 aufgebaut. An der ersten Griffhalbschale 44 ist eine Sperrkontur 62 angeformt, die im Folgenden noch näher beschrieben wird. Das Bedienelement 4 besitzt eine Lageraufnahme 64 für einen in Fig. 20 gezeigten Lagerbolzen 65. Am Bedienhebel 4 ist eine Öffnung 52 zur Einhängung des Koppelelements 12 vorgesehen. Die Öffnung 52 befindet sich an einem Arm 54 des Bedienelements 4.

Am Handgriff 3 ist außerdem ein Betätigungselement 46 gelagert, das mit einem ersten Lagerbolzen 47 um eine in Fig. 20 gezeigte erste Schwenkachse 69 und mit einem zweiten Lagerbolzen 49 um eine zweite, in Fig. 19 gezeigte Schwenkachse 70 verschwenkbar ist. Der zweite Lagerbolzen 49 ragt in eine Lagerbohrung 48, die quer durch den ersten Lagerbolzen 47 verläuft. Das Betätigungselement 46 ist um beide Schwenkachsen 69, 70 in Richtung auf die unbetätigte Stellung gefedert gelagert. Hierzu sind eine erste Feder 50 und eine zweite Feder 51 vorgesehen.

Wie Fig. 17 zeigt, besitzt das Betätigungselement 46 an der dem Lagerbolzen 49 abgewandten Seite einen Quersteg 68, dessen Stirnseite einen Blockierabschnitt 63 bildet. Der Blockierabschnitt 63 wirkt mit der Sperrkontur 62 an der ersten Griffhalbschale 44 zusammen. Am Quersteg 68 ist ein Sperrabschnitt 56 angeordnet, der mit dem Arm 54 des Bedienelements 4 zusammenwirkt, wie im Folgenden noch näher beschrieben wird.

Die Fig. 18 bis 20 zeigen die Anordnung in unbetätigter Stellung. Aus dieser Stellung ist das Betätigungselement 46 in einer ersten Betätigungsrichtung 74 zu betätigen. Wie Fig. 19 zeigt, liegt der Sperrabschnitt 56 des Betätigungselements 46 an einem ersten Bereich 55 des Arms 54 an und sperrt dadurch eine Verschwenkung des Bedienelements 4. Das Bedienelement 4 kann dadurch nicht auf den Antriebsmotor 11 wirken. Der Sperrabschnitt 56 bildet mit dem ersten Bereich 55 des Arms 54 eine erste Sperreinrichtung 53, die sich in der in Fig. 19 gezeigten, unbetätigten Position des Betätigungselements 46 in einem Sperrzustand 57 befindet. Der Blockierabschnitt 63 des Betätigungselements 46 liegt unmittelbar benachbart zur Sperrkontur 62 am Gehäuse des Handgriffs 3, nämlich an der ersten Griffhalbschale 44 an. Dadurch kann das Betätigungselement 46 nicht in einer zweiten Betätigungsrichtung 75 um die in Fig. 19 gezeigte Schwenkachse 70 verschwenkt werden. Der Blockierabschnitt 63 und die Sperrkontur 62 bilden eine Blockiereinrichtung 61. Auch Fig. 20 zeigt die Anordnung des Sperrabschnitts 56 am ersten Bereich 55 des Arms 54, der eine Verschwenkung des Bedienelements 4 um die Schwenkachse 39 verhindert. Wie Fig. 20 auch zeigt, besitzt die erste Griffhalbschale 44 eine Aufnahme 71 für den ersten Lagerbolzen 47. Eine entsprechende, nicht gezeigte Aufnahme ist an der zweiten Griffhalbschale 45 ausgebildet.

Die Fig. 21 bis 23 zeigen das Betätigungselement 46, nachdem es in der ersten Betätigungsrichtung 74 um die erste Schwenkachse 69 verschwenkt wurde (siehe Fig. 18 und 19). In dieser Stellung liegt der Sperrabschnitt 56 an einem zweiten Bereich 60 des Arms 54 an. Der Sperrabschnitt 56 bildet mit dem zweiten Bereich 60 eine zweite Sperreinrichtung 59, die sich in der in Fig. 22 gezeigten Stellung in einem Sperrzustand 66 befindet. Wie Fig. 23 zeigt, ist der Sperrabschnitt 56 vom ersten Bereich 55 weggeschwenkt, so dass sich die erste Sperreinrichtung 53 in ihrem Freigabezustand 58 befindet. Ein Verschwenken des Bedienelements 4 ist jedoch aufgrund des Sperrzustands 66 der zweiten Sperreinrichtung 59 nicht möglich. Wie Fig. 23 auch zeigt, blockiert die Blockiereinrichtung 61 das Verschwenken des Betätigungselements 46 um die zweite Schwenkachse 70 (Fig. 22) nicht mehr. Der Blockierabschnitt 63 liegt nicht mehr an der Sperrkontur 62 an.

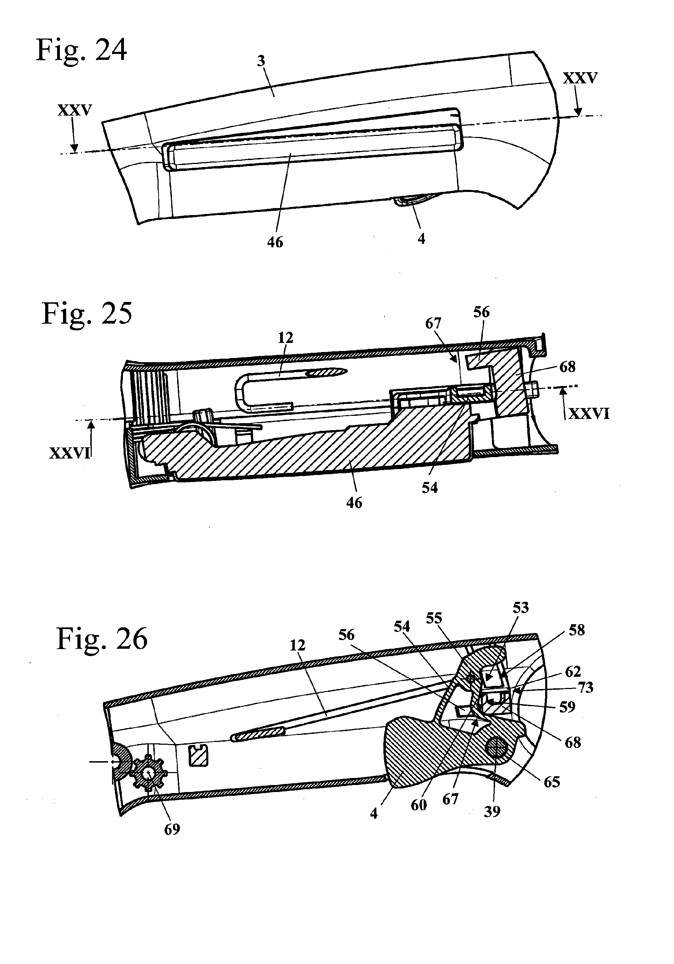

Die Fig. 24 bis 26 zeigen die Anordnung, nachdem das Betätigungselement 46 aus der in den Fig. 21 bis 23 gezeigten Stellung um die Schwenkachse 70 verschwenkt und das Bedienelement 4 betätigt wurde. Wie die Fig. 25 und 26 zeigen, befindet sich die erste Sperreinrichtung 53 in ihrem Freigabezustand 58, und die zweite Sperreinrichtung 59 befindet sich in ihrem Freigabezustand 67. Der Sperrabschnitt 56 liegt weder am ersten Bereich 55 noch am zweiten Bereich 60 an. Die Sperrkontur 62 bildet mit dem Quersteg 68 eine Verriegelungseinrichtung 73, die verhindert, dass das Betätigungselement 46 um die Schwenkachse 69 zurückschwenken kann. Zum Bedienen des Bedienelements 4 muss das Betätigungselement 46 in den beiden Betätigungsrichtungen 74 und 75 verschwenkt werden. Dabei muss zuerst eine Verschwenkung in Betätigungsrichtung 74 um die Schwenkachse 69 und anschließend eine Verschwenkung in Betätigungsrichtung 75 um die Schwenkachse 70 erfolgen. Die Betätigungsrichtungen 74 und 75 liegen dabei quer, insbesondere senkrecht zueinander. Wird das Betätigungselement 46 in der zweiten Betätigungsrichtung 75 verschwenkt, so verriegelt die Verriegelungseinrichtung 73 das Betätigungselement 46 gegen eine Verschwenkung entgegen der ersten Betätigungsrichtung 74. Das Betätigungselement 46 muss nur noch in der zweiten Betätigungsrichtung 75, jedoch nicht mehr in der ersten Betätigungsrichtung 74 gehalten werden. Dadurch ergibt sich eine einfache Bedienung.

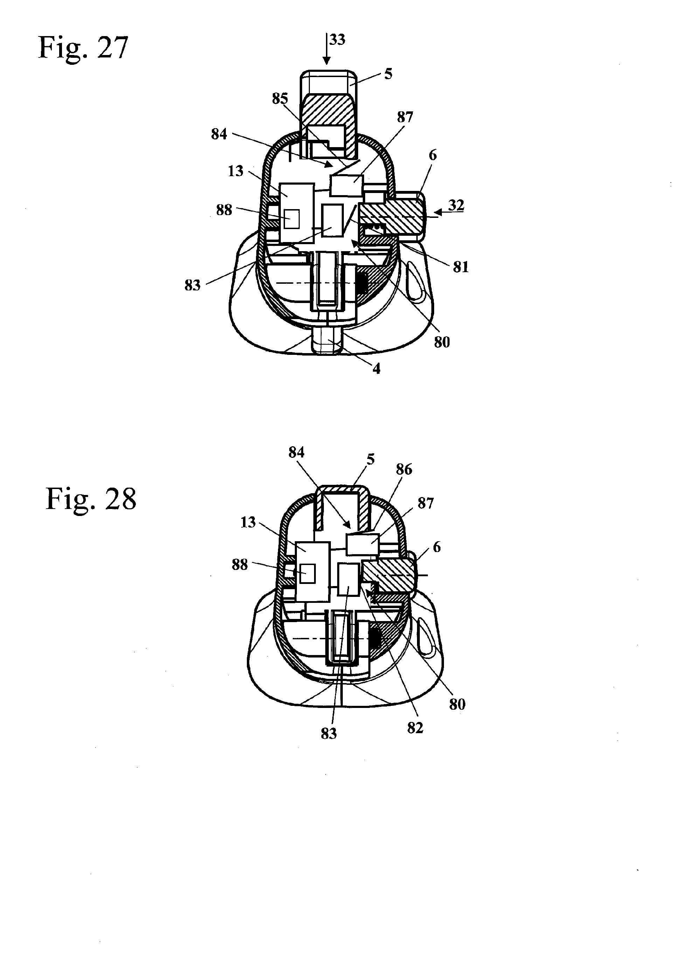

Die vorangegangenen Figuren zeigen mechanische Verriegelungen der ersten Sperreinrichtung durch die zweite Sperreinrichtung. Die Fig. 27 und 28 zeigen ein Ausführungsbeispiel, bei dem die Verriegelung elektrisch erfolgt. Gleiche Bezugszeichen kennzeichnen dabei auch hier gleiche Elemente wie in den vorangegangenen Figuren. Es sind zwei Betätigungselemente 5 und 6 vorgesehen, die den zu den Fig. 2 bis 16 beschriebenen Betätigungselementen 5 und 6 etwa entsprechen. Das erste Betätigungselement 6 wirkt auf einen ersten Schalter 83, und das zweite Betätigungselement 5 wirkt auf einen zweiten Schalter 87. Beide Schalter 83, 87 sind mit der Steuerungseinrichtung 13 verbunden, die eine Verriegelungseinrichtung 88 umfasst. Die Verriegelungseinrichtung 28 kann beispielsweise ein entsprechender Programmcode in einem Mikroprozessor der Steuereinrichtung 13 sein. In dem in Fig. 27 gezeigten Zustand sind beide Schalter 83 und 87 unbetätigt. Der erste Schalter 83 bildet einen Teil einer ersten Sperreinrichtung 80, die sich in der gezeigten Stellung in einem Sperrzustand 81 befindet. Der zweite Schalter 87 bildet einen Teil einer zweiten Sperreinrichtung 84, die sich ebenfalls in einem Sperrzustand 85 befindet. Werden die erste Betätigungseinrichtung 6 und die zweite Betätigungseinrichtung 5 in Richtung der Betätigungsrichtungen 32 und 33 betätigt, so wird die Anordnung in die in Fig. 28 gezeigte Stellung überführt. Beide Sperreinrichtungen 80 und 84 befinden sich nun in ihrem Freigabezustand 82 bzw. 86. Beide Schalter 83 und 87 sind betätigt. Die Verriegelungseinrichtung 88 verriegelt in dieser Stellung das erste Betätigungselement 6 in seinem Freigabezustand 82. Der Freigabezustand 82 der ersten Sperreinrichtung 80 wird erst dann aufgehoben und die Sperreinrichtung 80 in ihren Sperrzustand 81 verstellt, wenn das zweite Betätigungselement 5 losgelassen und die zweite Sperreinrichtung 84 in ihren Sperrzustand 85 verstellt wird. Dies wird vorteilhaft durch entsprechende Programmierung der Verriegelungseinrichtung 88 erreicht.

Das Betätigungselement 6 kann in der in Fig. 28 gezeigten betätigten Stellung mechanisch verrastet werden. Vorteilhaft ist das Betätigungselement 6 jedoch als Taster ausgeführt und wird, nachdem es vom Bediener losgelassen wurde, zurück in seine unbetätigte Stellung verstellt. Der Freigabezustand 82 der ersten Sperreinrichtung 80 bleibt dabei unabhängig von der Stellung des ersten Bedienelements 6 erhalten. Lediglich das zweite Betätigungselement 5 muss betätigt bleiben, um die Verriegelung der ersten Sperreinrichtung 80 im Freigabezustand 82 aufrechtzuerhalten.

Durch entsprechende Programmierung der Steuereinrichtung 13 kann vorgesehen sein, dass das erste Betätigungselement 6 und das zweite Betätigungselement 5 in einer vorgegebenen Betätigungsreihenfolge betätigt werden müssen, um das Bedienelement 4 zur Bedienung des Antriebsmotors 11 (Fig. 1) freizugeben. Vorteilhaft muss zuerst das erste Betätigungselement 6 und anschließend das zweite Betätigungselement 5 betätigt werden. Es kann jedoch auch eine andere Betätigungsreihenfolge vorgesehen sein. Es kann auch vorgesehen sein, dass nicht beide Betätigungselemente 5, 6 gleichzeitig betätigt werden müssen, sondern eine Betätigung in einem vorgegebenen, kurzen Zeitabstand zur Freigabe des Bedienelements 4 ausreichend ist. Vorteilhaft schaltet die Steuereinrichtung 13 das Bedienelement 4 zur Bedienung des Antriebsmotors 11 funktionslos, solange sich nicht beide Sperreinrichtungen 80 und 84 in ihrem Freigabezustand 82, 86 befinden.

Der Zustand der Sperreinrichtungen kann unabhängig von der Stellung des zugeordneten Betätigungselements sein.

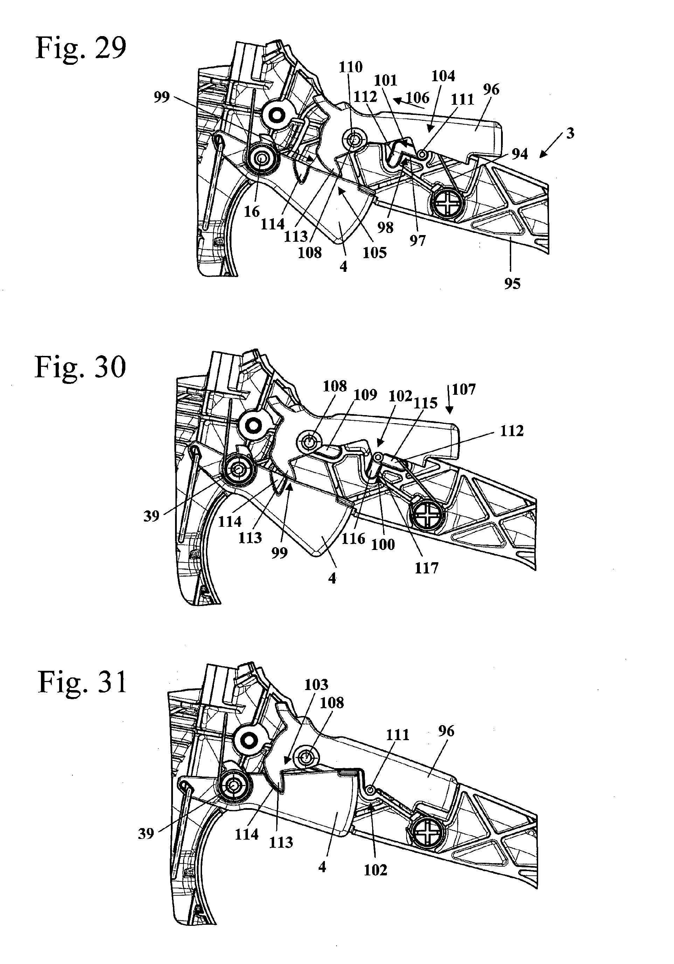

Die Figuren 29 bis 31 zeigen ein weiteres Ausführungsbeispiel eines Handgriffs 3 mit einem daran gelagerten Betätigungselement 96 und einem Bedienelement 4. Gleiche Bezugszeichen bezeichnen in allen Figuren einander entsprechende Elemente. Bei dem in den Figuren 29 bis 31 gezeigten Ausführungsbeispiel sind eine erste Sperreinrichtung 98 und eine zweite Sperreinrichtung 99 vorgesehen, die eine Betätigung des Bedienelements 4 sperren, solange sich nicht beide Sperreinrichtungen 98 und 99 in ihrem Freigabezustand 102 und 103 befinden.

Die erste Sperreinrichtung 98 ist zwischen einer Halbschale 95 des Handgriffs 3 und dem Betätigungselement 96 gebildet. Der Handgriff 3 ist dabei vorteilhaft von zwei spiegelsymmetrisch ausgebildeten Halbschalen 95 gebildet, von denen in den Figuren nur eine gezeigt ist. Das Betätigungselement 96 ist von einer Feder 94 in Richtung auf die in Fig. 29 gezeigte unbetätigte Stellung vorgespannt. Das Betätigungselement 96 besitzt zwei Führungszapfen 111, von denen in Fig. 29 einer gezeigt ist. Die Führungszapfen 96 ragen in eine im Handgriff 3 ausgebildete Nut 112. Eine Längsseite der Nut 112 bildet eine Sperrkontur 97 der ersten Sperreinrichtung 98. Die Sperrkontur 97 liegt bei der in Fig. 29 gezeigten Stellung des Betätigungselements 96 im Schwenkweg des Betätigungselements 96 um seine Schwenkachse 108 und verhindert, dass das Betätigungselement 96 aus der in Fig. 29 gezeigten unbetätigten Stellung um die Schwenkachse 108 verschwenkt werden kann. Die erste Sperreinrichtung 98 befindet sich in der in Fig. 29 gezeigten Stellung in ihrem Sperrzustand 104. Die Sperrkontur 97 bildet mit dem Führungszapfen 111 eine Blockiereinrichtung 101, die ein Verschwenken des Betätigungselements 96 um seine Schwenkachse 108 verhindert. Damit legt die Sperrkontur 97 die Reihenfolge fest, in der die beiden Bewegungen des Betätigungselements 96 zum Lösen der beiden Sperreinrichtungen 98 und 99 auszuführen sind.

Eine zweite Sperreinrichtung 99 ist zwischen einem Sperrabschnitt 113 des Betätigungselements 96 und dem Bedienelement 4 gebildet. Der Sperrabschnitt 113 liegt in dem in Fig. 29 gezeigten Sperrzustand 105 der zweiten Sperreinrichtung 99 an einer Längsseite des Bedienelements 4 an. Der Sperrabschnitt 113 liegt im Verschwenkweg des Bedienelements 4. Dadurch kann das Bedienelement 4 nicht betätigt werden.

Fig. 30 zeigt die Anordnung aus Fig. 29, nachdem das Betätigungselement 96 in Richtung der in Fig. 29 gezeigten ersten Betätigungsrichtung 106 verschoben wurde. Bei Verschieben des Betätigungselements 96 gleitet der Führungszapfen 111 in der Nut 112 ab. Die Nut 112 ist etwa L-förmig ausgebildet, wobei ein erster Abschnitt 115 der Nut 112 parallel zur ersten Betätigungsrichtung 106 verläuft und ein zweiter Abschnitt 116 quer hierzu. Der zweite Abschnitt 116 ist dabei als Kreisbogenabschnitt um die Schwenkachse 108 ausgebildet. Bei Verschieben des Betätigungselements 96 in der ersten Betätigungsrichtung 106 gleitet der Führungszapfen 111 im ersten Abschnitt 115 der Nut 112 ab. Wie Fig. 30 auch zeigt, besitzt das Betätigungselement 96 einen Lagerbolzen 110, an dem die Schwenkachse 108 des Betätigungselements 96 ausgebildet ist. Der Lagerbolzen 110 des Betätigungselements 96 ist in einer Längsnut 109 am Handgriff 3 geführt, die parallel zum ersten Abschnitt 115 der Nut 112 und in der ersten Betätigungsrichtung 106 verläuft. Die Längsnut 109 ermöglicht die Verschiebung des Betätigungselements 96 in der ersten Betätigungsrichtung 106. Dabei ändert sich die Lage der Schwenkachse 108 am Handgriff 3.

In der in Fig. 30 gezeigten Stellung befindet sich die erste Sperreinrichtung 98 in ihrem Freigabezustand 102. Die zweite Sperreinrichtung 99 befindet sich in ihrem Sperrzustand 105. Der Sperrabschnitt 113 liegt am Bedienelement 4 an. Der Sperrabschnitt 113 liegt im Schwenkweg des Bedienelements 4 und verhindert dadurch, dass das Bedienelement 4 verschwenkt werden kann. Aus der in Fig. 30 gezeigten Stellung kann das Betätigungselement 96 um seine Schwenkachse 108 in einer zweiten Betätigungsrichtung 107 verschwenkt werden, die quer, insbesondere etwa senkrecht zur ersten Betätigungsrichtung 106 liegt. Dabei gleitet der Führungszapfen 111 im zweiten Abschnitt 116 der Nut 112 ab. Die entgegen der ersten Betätigungsrichtung 106 liegende Wand 117 der Nut 112 verhindert, dass sich das Betätigungselement 96 entgegen der ersten Betätigungsrichtung 106 (Fig. 29) bewegen kann. Die Wand 117 bildet mit dem Führungszapfen 111 eine Verriegelungseinrichtung 100, die die erste Sperreinrichtung 98 in ihrem Freigabezustand 102 hält.

In Fig. 31 ist auch die zweite Sperreinrichtung 99 in ihrem Freigabezustand 103 angeordnet. Das Betätigungselement 96 wurde aus der in Fig. 30 gezeigten Stellung um seine Schwenkachse 108 in der zweiten Betätigungsrichtung 107 verschwenkt, bis der Sperrabschnitt 113 in den Bereich der Aussparung 114 gelangt ist. Dadurch konnte das Bedienelement 4 um seine Schwenkachse 39 in die in Fig. 31 gezeigte, vollständig betätigte Stellung verschwenkt werden. Dadurch, dass die Verriegelungseinrichtung 100 (Fig. 30) die erste Sperreinrichtung 98 in ihrer Freigabestellung 102 hält, muss der Bediener das Betätigungselement 96 lediglich in der zweiten Betätigungsrichtung 107 betätigt halten.

## Patentansprüche

1. Handgeführtes Arbeitsgerät mit einem Antriebsmotor (11) zum Antrieb mindestens eines Werkzeugs, mit einem Bedienelement (4) zur Bedienung des Antriebsmotors (11), mit einer ersten Sperreinrichtung (17, 53, 80, 98) und mit einer zweiten Sperreinrichtung (23, 59, 84, 99), wobei jede Sperreinrichtung (17, 23, 53, 59, 80, 84, 98, 99) einen Sperrzustand (21, 26, 57, 66, 81, 85, 104, 105) und einen Freigabezustand (22, 27, 58, 67, 82, 86, 102, 103) besitzt, und wobei das Bedienelement (4) zur Bedienung des Antriebsmotors (11) gesperrt ist, wenn sich mindestens eine der Sperreinrichtungen (17, 23, 53, 59, 80, 84, 98, 99) in ihrem Sperrzustand (21, 26, 57, 66, 81, 85, 104, 105) befindet,
**dadurch gekennzeichnet, dass** das Arbeitsgerät eine Verriegelungseinrichtung (43, 73, 88, 100) besitzt, wobei die Verriegelungseinrichtung (43, 73, 88, 100) die erste Sperreinrichtung (17, 53, 80, 98) in ihrem Freigabezustand (22, 58, 82, 102) verriegelt, wenn sich die zweite Sperreinrichtung (23, 59, 84, 99) in ihrem Freigabezustand (27, 67, 86, 103) befindet.

2. Arbeitsgerät nach Anspruch 1,
**dadurch gekennzeichnet, dass** das Arbeitsgerät eine Blockiereinrichtung (61, 101) besitzt, die die Verstellung der zweiten Sperreinrichtung (23, 59, 99) in ihren Freigabezustand (27, 67, 103) blockiert, wenn sich die erste Sperreinrichtung (17, 53, 98) in ihrem Sperrzustand (21, 57, 98) befindet.

3. Arbeitsgerät nach Anspruch 2,
**dadurch gekennzeichnet, dass** die Blockiereinrichtung (61, 101) eine Sperrkontur (62, 97) umfasst, die die Verstellung der zweiten Sperreinrichtung (23, 59, 99) in ihren Freigabezustand (27, 67, 103) blockiert.

4. Arbeitsgerät nach einem der Ansprüche 1 bis 3,
**dadurch gekennzeichnet, dass** die Betätigungsrichtung (32, 74, 106) der ersten Sperreinrichtung (17, 53, 80, 98) quer zur Betätigungsrichtung (33, 75, 107) der zweiten Sperreinrichtung (23, 59, 84, 99) liegt.

5. Arbeitsgerät nach einem der Ansprüche 1 bis 4,
**dadurch gekennzeichnet, dass** die Verriegelungseinrichtung (43, 73, 100) die erste Sperreinrichtung (17, 53) mechanisch verriegelt.

6. Arbeitsgerät nach einem der Ansprüche 1 bis 5,
**dadurch gekennzeichnet, dass** die erste Sperreinrichtung (17, 53, 80, 98) ein erstes Betätigungselement (6, 46, 96) zur Verstellung der ersten Sperreinrichtung (17, 53, 80, 98) vom Sperrzustand (21, 57, 81, 104) in den Freigabezustand (22, 58, 82, 102) besitzt.

7. Arbeitsgerät nach Anspruch 6,
**dadurch gekennzeichnet, dass** die zweite Sperreinrichtung (23, 84) ein zweites Betätigungselement (5) zur Verstellung der zweiten Sperreinrichtung (23, 84) vom Sperrzustand (26, 85) in den Freigabezustand (27, 86) besitzt.

8. Arbeitsgerät nach Anspruch 7,
**dadurch gekennzeichnet, dass** die Verriegelungseinrichtung (43) von dem ersten Betätigungselement (6) und dem zweiten Betätigungselement (5) gebildet ist.

9. Arbeitsgerät nach Anspruch 6,
**dadurch gekennzeichnet, dass** das erste Betätigungselement (46, 96) zur Verstellung der zweiten Sperreinrichtung (59, 99) vom Sperrzustand (66, 105) in den Freigabezustand (67, 103) dient.

10. Arbeitsgerät nach Anspruch 9,
**dadurch gekennzeichnet, dass** das erste Betätigungselement (46, 96) in einem Gehäuse gelagert ist und die Verriegelungseinrichtung (73, 100) von dem ersten Betätigungselement (46, 96) und dem Gehäuse gebildet ist.

11. Arbeitsgerät nach einem der Ansprüche 1 bis 4,
**dadurch gekennzeichnet, dass** die Verriegelungseinrichtung (88) die erste Sperreinrichtung (80) elektrisch verriegelt.

12. Arbeitsgerät nach einem der Ansprüche 1 bis 11,
**dadurch gekennzeichnet, dass** die zweite Sperreinrichtung (23, 59, 99) in ihrem Sperrzustand (26, 66, 105) eine Bewegung des Bedienelements (4) sperrt.

13. Arbeitsgerät nach einem der Ansprüche 1 bis 11,
**dadurch gekennzeichnet, dass** die zweite Sperreinrichtung (84) in ihrem Sperrzustand (85) das Bedienelement (4) funktionslos schaltet.

14. Arbeitsgerät nach einem der Ansprüche 1 bis 13,
**dadurch gekennzeichnet, dass** mindestens eine Sperreinrichtung (17, 23, 53, 59, 80, 84, 98, 99) in Richtung auf ihren Sperrzustand (21, 26, 57, 66, 81, 85, 104, 105) gefedert gelagert ist.

15. Verfahren zum Betrieb eines handgeführten Arbeitsgeräts, wobei das Arbeitsgerät einen Antriebsmotor (11) zum Antrieb mindestens eines Werkzeugs, ein Bedienelement (4) zur Bedienung des Antriebsmotors (11), eine erste Sperreinrichtung (17, 53, 80, 98) und eine zweite Sperreinrichtung (23, 59, 84, 99) besitzt, wobei jede Sperreinrichtung (17, 23, 53, 59, 80, 84, 98, 99) einen Sperrzustand (21, 26, 57, 66, 81, 85, 104, 105) und einen Freigabezustand (22, 27, 58, 67, 82, 86, 102, 103) besitzt, und wobei das Bedienelement (4) zur Bedienung des Antriebsmotors (11) gesperrt ist, wenn sich mindestens eine der Sperreinrichtungen (17, 23, 53, 59, 80, 84, 98, 99) in ihrem Sperrzustand (21, 26, 57, 66, 81, 85, 104, 105) befindet, **dadurch gekennzeichnet, dass** die erste Sperreinrichtung (17, 53, 80, 98) in ihrem Freigabezustand (22, 58, 82, 102) verriegelt wird, wenn sich die erste Sperreinrichtung (17, 53, 80, 98) und die zweite Sperreinrichtung (23, 59, 84, 99) gleichzeitig in ihrem Freigabezustand (22, 27, 58, 67, 82, 86, 102, 103) befinden.

## Claims

1. Hand-held work device with a drive motor (11) for driving at least one tool, with an operating element (4) for operating the drive motor (11), with a first locking means (17, 53, 80, 98) and with a second locking means (23, 59, 84, 99), wherein each locking means (17, 23, 53, 59, 80, 84, 98, 99) has a locked state (21, 26, 57, 66, 81, 85, 104, 105) and a release state (22, 27, 58, 67, 82, 86, 102, 103), and wherein the operating element (4) for operating the drive motor (11) is locked if at least one of the locking means (17, 23, 53, 59, 80, 84, 98, 99) is in its locked state (21, 26, 57, 66, 81, 85, 104, 105),
**characterised in that** the work device has an interlocking means (43, 73, 88, 100), wherein the interlocking means (43, 73, 88, 100) interlocks the first locking means (17, 53, 80, 98) in its release state (22, 58, 82, 102) if the second locking means (23, 59, 84, 99) is in its release state (27, 67, 86, 103).

2. Hand-held work device according to claim 1,
**characterised in that** the work device has a blocking means (61, 101) which blocks the adjustment of the second locking means (23, 59, 99) into its release state (27, 67, 103) if the first locking means (17, 53, 98) is in its locked state (21, 57, 98).

3. Work device according to claim 2,
**characterised in that** the blocking means (61, 101) comprises a blocking contour (62, 97) which blocks the adjustment of the second locking means (23, 59, 99) into its release state (27, 67, 103).

4. Work device according to one of claims 1 to 3,
**characterised in that** the actuating direction (32, 74, 106) of the first locking means (17, 53, 80, 98) lies transversely to the actuating direction (33, 75, 107) of the second locking means (23, 59, 84, 99).

5. Work device according to one of claims 1 to 4,
**characterised in that** the interlocking means (43, 73, 100) mechanically interlocks the first locking means (17, 53).

6. Work device according to one of claims 1 to 5,
**characterised in that** the first locking means (17, 53, 80, 98) has a first actuating element (6, 46, 96) for adjusting the first locking means (17, 53, 80, 98) from the locked state (21, 57, 81, 104) into the release state (22, 58, 82, 102).

7. Work device according to claim 6,
**characterised in that** the second locking means (23, 84) has a second actuating element (5) for adjusting the second locking means (23, 84) from the locked state (26, 85) into the release state (27, 86).

8. Work device according to claim 7,
**characterised in that** the interlocking means (3) is formed by the first actuating element (6) and the second actuating element (5).

9. Work device according to claim 6,
**characterised in that** the first actuating element (46, 96) serves to adjust the second locking means (59, 99) from the locked state (66, 105) into the release state (67, 103).

10. Work device according to claim 9,
**characterised in that** the first actuating element (46, 96) is mounted in a housing and the interlocking means (73, 100) is formed by the first actuating element (46, 96) and the housing.

11. Work device according to one of claims 1 to 4,
**characterised in that** the interlocking means (88) electrically interlocks the first locking means (80).

12. Work device according to one of claims 1 to 11,
**characterised in that** the second locking means (23, 59, 99) in its locked state (26, 66, 105) locks a movement of the operating element (4).

13. Work device according to one of claims 1 to 11,
**characterised in that** the second locking means (84) in its locked state (85) switches the operating element (4) function-free.

14. Work device according to one of claims 1 to 13,
**characterised in that** at least one locking means (17, 23, 53, 59, 80, 84, 98, 99) is mounted sprung in the direction towards its locked state (21, 26, 57, 66, 81, 85, 104, 105).

15. Method for operating a hand-held work device, wherein the work device has a drive motor (11) for driving at least one tool, an operating element (4) for operating the drive motor (11), a first locking means (17, 53, 80, 98) and a second locking means (23, 59, 84, 99), wherein each locking means (17, 23, 53, 59, 80, 84, 98, 99) has a locked state (21, 26, 57, 66, 81, 85, 104, 105) and a release state (22, 27, 58, 67, 82, 86, 102, 103), and wherein the operating element (4) for operating the drive motor (11) is locked if at least one of the locking means (17, 23, 53, 59, 80, 84, 98, 99) is in its locked state (21, 26, 57, 66, 81, 85, 104, 105),
**characterised in that** the first locking means (17, 53, 80, 98) is interlocked in its release state (22, 58, 82, 10) if the first locking means (17, 53, 80, 98) and the second locking means (23, 59, 84, 99) are simultaneously in their release state (22, 27, 58, 67, 82, 86, 102, 103).

## Revendications

1. Appareil à main avec un moteur d'entraînement (11) pour entraîner au moins un outil, avec un élément de commande (4) pour commander le moteur d'entraînement (11), avec un premier dispositif d'arrêt (17, 53, 80, 98) et avec un second dispositif d'arrêt (23, 59, 84, 99), étant précisé que chaque dispositif d'arrêt (17, 23, 53, 59, 80, 84, 98, 99) présente un état d'arrêt (21, 26, 57, 66, 81, 85, 104, 105) et un état de libération (22, 27, 58, 67, 82, 86, 102, 103), et que l'élément de commande (4) pour commander le moteur d'entraînement (11) est arrêté quand l'un au moins des dispositifs d'arrêt (17, 23, 53, 59, 80, 84, 98, 99) se trouve dans sa position d'arrêt (21, 26, 57, 66, 81, 85, 104, 105),
**caractérisé en ce que** l'appareil comporte un dispositif de verrouillage (43, 73, 88, 100), étant précisé que le dispositif de verrouillage (43, 73, 88, 100) verrouille le premier dispositif d'arrêt (17, 53, 80, 98) dans sa position de libération (22, 58, 82, 102) quand le second dispositif d'arrêt (23, 59, 84, 99) se trouve dans sa position de libération (27, 67, 86, 103).

2. Appareil selon la revendication 1,
**caractérisé en ce que** l'appareil comporte un dispositif de blocage (61, 101) qui bloque l'amenée du second dispositif d'arrêt (23, 59, 99) dans sa position de libération (27, 67, 103) quand le premier dispositif d'arrêt (17, 53, 98) se trouve dans sa position d'arrêt (21, 57, 98).

3. Appareil selon la revendication 2,
**caractérisé en ce que** le dispositif de blocage (61, 101) comprend un contour d'arrêt (62, 97) qui bloque l'amenée du second dispositif d'arrêt (23, 59, 99) dans sa position de libération (27, 67, 103).

4. Appareil selon l'une des revendications 1 à 3,
**caractérisé en ce que** le dispositif d'actionnement (32, 74, 106) du premier dispositif d'arrêt (17, 53, 80, 98) est situé transversalement par rapport au sens d'actionnement (33, 75, 107) du second dispositif d'arrêt (23, 59, 84, 99).

5. Appareil selon l'une des revendications 1 à 4,
**caractérisé en ce que** le dispositif de verrouillage (43, 73, 100) verrouille mécaniquement le premier dispositif d'arrêt (17, 53).

6. Appareil selon l'une des revendications 1 à 5,
**caractérisé en ce que** le premier dispositif d'arrêt (17, 53, 80, 98) comporte un premier élément d'actionnement (6, 46, 96) pour amener le premier dispositif d'arrêt (17, 53, 80, 98) de la position d'arrêt (21, 57, 81, 104) dans la position de libération (22, 58, 82, 102).

7. Appareil selon la revendication 6,
**caractérisé en ce que** le second dispositif d'arrêt (23, 84) comporte un second élément d'actionnement (5) pour faire passer le second dispositif d'arrêt (23, 84) de la position d'arrêt (26, 85) à la position de libération (27, 86).

8. Appareil selon la revendication 7,
**caractérisé en ce que** le dispositif de verrouillage (43) est formé par le premier élément d'actionnement (6) et le second élément d'actionnement (5).

9. Appareil selon la revendication 6,
**caractérisé en ce que** le premier élément d'actionnement (46, 96) sert à faire passer le second dispositif d'arrêt (59, 99) de la position d'arrêt (66, 105) à la position de libération (67, 103).

10. Appareil selon la revendication 9,
**caractérisé en ce que** le premier élément d'actionnement (46, 96) est monté dans un boîtier, et le dispositif de verrouillage (73, 100) est formé par le premier élément d'actionnement (46, 96) et le boîtier.

11. Appareil selon l'une des revendications 1 à 4,
**caractérisé en ce que** le dispositif de verrouillage (88) verrouille électriquement le premier dispositif d'arrêt (80).

12. Appareil selon l'une des revendications 1 à 11,
**caractérisé en ce que** le second dispositif d'arrêt (23, 59, 99), dans sa position d'arrêt (26, 66, 105), empêche un déplacement de l'élément de commande (4).

13. Appareil selon l'une des revendications 1 à 11,
**caractérisé en ce que** le second dispositif d'arrêt (84), dans sa position d'arrêt (85), rend l'élément de commande (4) inopérant.

14. Appareil selon l'une des revendications 1 à 13,
**caractérisé en ce qu'**au moins un dispositif d'arrêt (17, 23, 53, 59, 80, 84, 98, 99) est monté pour faire ressort en direction de sa position d'arrêt (21, 26, 57, 66, 81, 85, 104, 105).

15. Procédé pour faire fonctionner un appareil à main, étant précisé que l'appareil comporte un moteur d'entraînement (11) pour entraîner au moins un outil, un élément de commande (4) pour commander le moteur d'entraînement (11), un premier dispositif d'arrêt (17, 53, 80, 98) et un second dispositif d'arrêt (23, 59, 84, 99), étant précisé que chaque dispositif d'arrêt (17, 23, 53, 59, 80, 84, 98, 99) présente un état d'arrêt (21, 26, 57, 66, 81, 85, 104, 105) et un état de libération (22, 27, 58, 67, 82, 86, 102, 103), et que l'élément de commande (4) pour commander le moteur d'entraînement (11) est arrêté quand l'un au moins des dispositifs d'arrêt (17, 23, 53, 59, 80, 84, 98, 99) se trouve dans sa position d'arrêt (21, 26, 57, 66, 81, 85, 104, 105),
**caractérisé en ce que** le premier dispositif d'arrêt (17, 53, 80, 98) est verrouillé dans sa position de libération (22, 58, 82, 102) quand le premier dispositif d'arrêt (17, 53, 80, 98) et le second dispositif d'arrêt (23, 59, 84, 99) se trouvent en même temps dans leur position de libération (22, 27, 58, 67, 82, 86, 102, 103).
